# EUROPEAN PATENT APPLICATION

(11) **EP 1 770 227 A2**
(43) Date of publication of application: **04.04.2007**
(21) Application number: 06386028.2
(22) Date of filing: 25.09.2006
(51) Int. Cl.: E04C 2/26, E04C 2/292, B32B 15/00

(54) **Sandwich panel and method of its construction**

(30) Priority: 29.09.2005 GR 2005100500
(71) Applicant: Pantelelis, Nikolaos, 16121 Kaisariani, Attikis (GR)
(72) Inventor: Pantelelis, Nikolaos, 16121 Kaisariani, Attikis (GR)

(57) **Abstract**

The invention refers to a new material combination in a sandwich structure for the construction of a lightweight platform with good mechanical performance. Also the invention refers to the production method of this complex structure in such a way that very good structural performance is achieved even to local loads. In this invention metal sheets in the outer surface and light core (e.g. foam from thermoplastic or thermoset polymer) internally are combined for the first time. For the protection of the sidewalls and the decrease of buckling of the metal sheets the sheets are folded in order the upper and lower sheets almost cover the foam. These materials are bonded together with an epoxy or other type of strong low-viscosity adhesive in order to attain very good wetting of the common surfaces under compression and vacuum conditions.

## Description

### Description of the invention

The invention refers to a new combination of materials in a sandwich-type structure for the production of a lightweight structure with very good structural characteristics. Furthermore the invention refers to the production method of this complex structure in order to attain the high structural performance even for pointwise loads. It is well known that sandwich structures (beams or plates) comprise two thin high strength external skins and a much thicker lightweight inner core (honeycomp, foam, wood, etc.). Due to their much higher bending stiffness of the sandwich structures they present the optimal way to cope with bending loads as with the minor extra weight of the core the bending deformations are reduced to the power of three and the stresses to the power of two of the core thickness. For the optimal use of the advantages of each material in a sandwich structure the outer skins should have high strength and elastic modulus in tension and compression while the core material should be light with the adequate strength and elastic modulus in shear and compression. In the present invention the combination of outer metallic sheets and inner light core (e.g. foam from thermoplastic or thermoset polymer) is used internally. For the protection of the core sides but also to reduce buckling of the skins the metallic sheets are folded around the sides of the core in such a way that the upper and lower sheets totally include the core. These materials are adhesive bonded together with a high strength low-viscosity adhesive in such a way that a good wetting of all common surfaces is achieved under compression and vacuum conditions.

### State of the art

Sandwich structures are the optimal design solution in the case of undertaking of bending loadings as with minor extra mass they can bear significantly higher bending loads with considerably lower deformations with respect to a monolithic structure. However sandwich structures have been used only to specific applications e.g. in the aerospace and boat building industries due to their high costs associated with the materials and production and their complicated structural behaviour. Generally, the outer skins of the sandwich are made from composite materials i.e. high strength fibres (glassfibres, carbonfibres etc.) with high strength resins (epoxies, polyesters etc.). For the core of the sandwich either honeycomps or high performance cores are used. These structures are of particularly high mechanical performance but very vulnerable to impact. Generally their manufacturing methods are batch processes, requires high technology and are complicated leading to significant increase of production cost and time. Additionally, in these sandwich structures it is impossible to retrieve the original materials so their recycling is particularly problematic.

Similar, but simplified structures without particular mechanical performance are used in buildings either as architectural structures or as panel walls due to their mass production and their high thermal insulation properties of the polyurethane foam used as core material. Besides the steel skins that are used in these structures, they cannot withstand loads due to their low performance polyurethane foam core while no additional adhesive is used. These wall panels are produced in a continuous production line using cylinders and in situ production of the polyurethane foam core in such a way that it is simultaneous bonded to the steel skins.

Recently some new sandwich panels with very thin aluminum sheet skins and thin solid polymeric cores have been presented for the replacement of the classic steel body panels in the automotive industry with a load bearing capacity. These structures are also produced in a continuous production line with the use of cylinders and the simultaneous injection of the polymeric core. The advantage of these sandwich structures is that they can be thermoformed. In relevant to the present invention patents the American patent No. 4,459,334 (10th July 1984) introduces a new type of sandwich panels where its skin layers are made from very thin aluminum sheet (up to 0.0008 inches) used mainly as a coating while its structural characteristics come from its intermediate layer made of random glass fibre. Between these two outer skins the polyurethane foam is injected in a continuous process. A disadvantage of this invention with respect to the proposed patent is the considerably lower mechanical properties of the outer skins.

Another American patent that is based on the same principal as the present one is No. 6,455,148 (24 September 2002) with the difference that the present patent refers to much larger panel dimensions and much thicker core in such a way that the panel can withstand much higher loads while its manufacturing process is completely different.

### Advantages of the invention

In the present invention a new combination of the aforementioned materials and technologies is proposed for the construction of lightweight sandwich panels from metal skin and very thick core which are adhesive bonded together. The advantages of the invention is that the panel is of high structural performance, it is lightweight and recyclable, with relatively lower cost while its manufacturing is fast, with no particular required skills. It should be stressed that with respect to the sandwich panels from composite materials which present the most modem technology the proposed panel is much more competitive even in weigh reduction for the very simple reason that the sandwich skins are loaded mainly in tension and compression loads where metals such as steel and aluminium are very competitive with the additional characteristic of being isotropic in contrast to the composite materials which are strongly orthotropic, a characteristic which is disadvantageous when no main loading direction exist as in the case of the panels. For example, even if the E-type glassfibre and the carbonfibre present a specific elastic modulus (E/p) about 30 and 120 respectfully, this drops by more than 10 times when the matrix is added and the fibers are distributed randomly to create a near isotropic composite material. So the specific elastic modulus (E/p) of the composite sheet from glassfibres or carbonfibres drops to 3 and 12, respectively whereas the corresponding values for steel and aluminium are about 27. Considering also the much higher cost of the composite materials and the difficulty in their manufacturing we can conclude that for sandwich structures the use of non-metallic materials is not competitive except for special requirements and specifications.

Furthermore it is of particular resistance to environmental conditions if non-corrosive metals such as aluminum alloys, stainless steel etc. are used in the skins so long lasting is ensured while they can be also repaired. Because of the formation of the skins on the sidewalls in such a way that the core is fully encapsulated inside the metal skin the full protection of the core from accidental impacts is ensured while the stiffness and buckling load limits of the skins and the panel are increased.

### Description of the invention

This invention proposes the production of a flat platform with large one or two of its dimensions (over 2 m) whereas its third dimension (thickness) is much smaller (over 50 mm but lower than 250 mm). The main panel has the shape of a solid parallelepiped which is surrounded (in all faces) with a thin metallic sheet while its interior is filled with a lightweight material e.g. solid foam, wood or a combination of such materials.

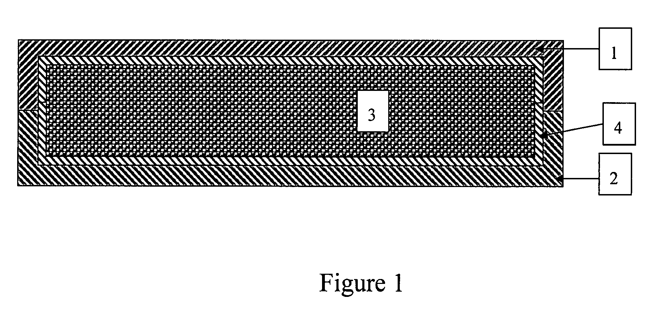

In figure 1 a cross section of this panel is shown (its thickness is enlarged for viewing purposes) where the metallic sheets can be seen in the upper and sides (1) and in the lower and rest sides (2), the core material (3) which is much thicker than the metal skins and the two very thin layers of liquid adhesive (4) between the metallic jacket and the core material (also enlarged in the figure).

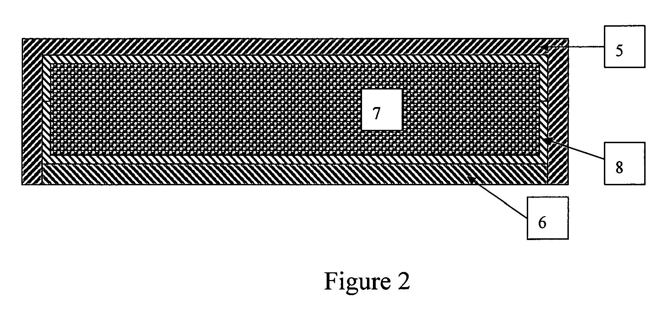

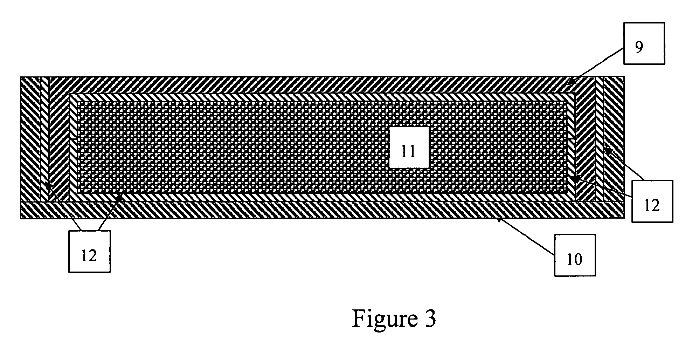

The metallic sheets and the core materials are selected based on the requirements and the specifications of the use of the panel. A common requirement for the metal skin is to have good structural properties such as high elastic modulus, good strength in tension/ compression loads, good impact behaviour and good environmental resistance to corrosion, sun etc. Additionally, the metal skin should present very good adhesion properties with the core materials so the galvanized steel should be avoided. Examples of metals that could be used for the outer of the panel are aluminium, titanium, steel, stainless steel and many other metallic alloys or a combination of them. The thickness of the metal skin depends on the expected loads, the use of the panel and the selected metal characteristics but in any case its total thickness should be higher than 0.3 mm and lower than 10 mm. Also a combination of these materials can be used as shown in figures 2 and 3. In figure 2 the upper part of the metal skin covers 3 of the panel faces (5) while the lower sheet covers only the lower part of the panel (6) while the core (7) and the adhesive (8) is similar to the previous case of figure 1. In figure 3 another configuration of the outer metal skin is shown in such a way that a thicker outer skin is achieved in the small faces of the cross section of the panel (left and right). So the upper part of the skin (9) is positioned into the lower part of the skin (10) including the core (11) while the adhesive layer (12) is applied in every covered surface i.e. the adhesive is applied between the common surfaces of the metallic sheets and the core but also between the common small surfaces of the upper and lower sheets.

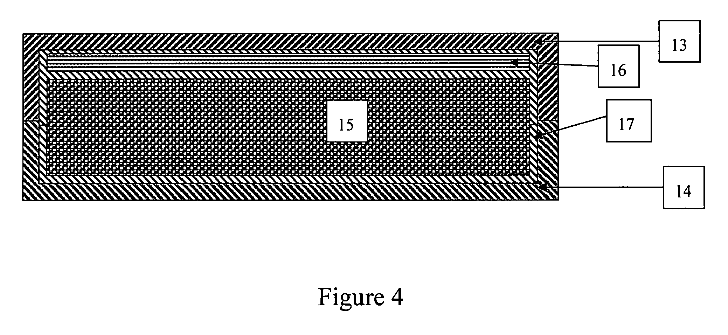

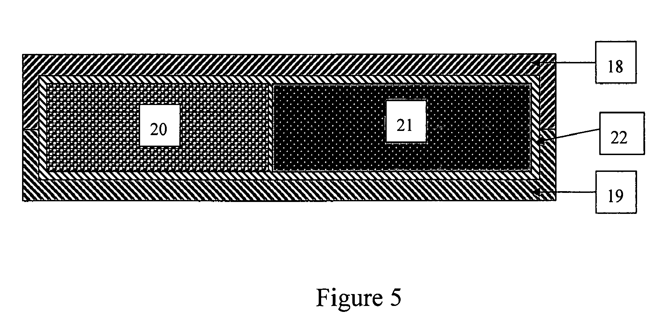

Referring to the core material, this should be relatively lightweight, compact and should present according to the panel specifications relatively good mechanical properties in the modulus of elasticity under compression and shear but also low density. The basic requirement from the core material is to superficially take up some of the adhesive in such a way that very good adhesion with the metallic skins is attained. Examples of potential materials that can be used as core materials are all kind of polymeric foams e.g. polyurethanes, XPS, EPS, PVC, PMI etc. (for relatively low loads) but also appropriate woods such as the balsa or the plywood (for higher loads). Furthermore, a combination of these materials can be used as can be seen in figures 4 and 5. In figure 4 two different core materials (15 and 16) have been placed in parallel with respect to the two larger dimensions of the panel (13 and 14) while everywhere between all the aforementioned materials an adhesive layer (17) is applied. In figure 5 two different core materials (20 and 21) have been placed perpendicular to the two larger dimensions of the panel (18 and 19) while everywhere between all these materials an adhesive layer (22) is applied. The thickness and the configuration of the core materials depend on the type of the core material, the loadings and the use of the panel and in any case should be thicker than 30 mm and thinner than 230 mm.

With respect to the adhesive medium, this should be liquid of relatively low viscosity in order to impregnate the core material's open cells in the surface thus the adhesion of the core and the outer metallic sheet is of good quality everywhere in their common faces. The adhesive should be of good mechanical properties whereas its contribution to the total mass of the panel should not exceed 5%.

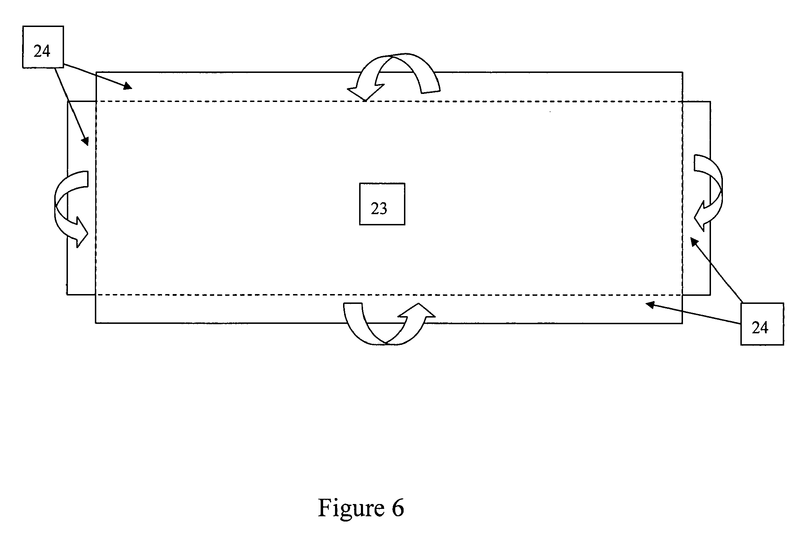

The production procedure of this sandwich panel is not continuous, but it is repeatable for each panel in a batch way as shown in figures 6, 7 and 8. In figure 6 a part of the outer skin is shown which is a metallic sheet (23). The dimensions of the sheet should be as follows: its length equals to the length of the panel plus the thickness of the panel, its width also equals the width of the panel plus the thickness of the panel. Then rectangular patches of the size of half the height of the panel are removed from the four corners so that the shape of the sheet (23) shown in figure 6 emerges. Afterwards the sheet's face sides (24) are folded by 90° inwards with respect to the main sheet exactly at the dotted lines shown in figure 6 so that an open box is created. The same procedure is repeated for the other sheet.

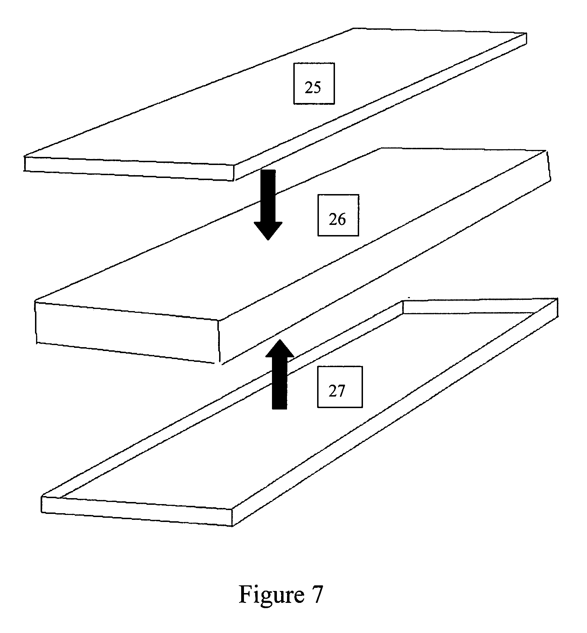

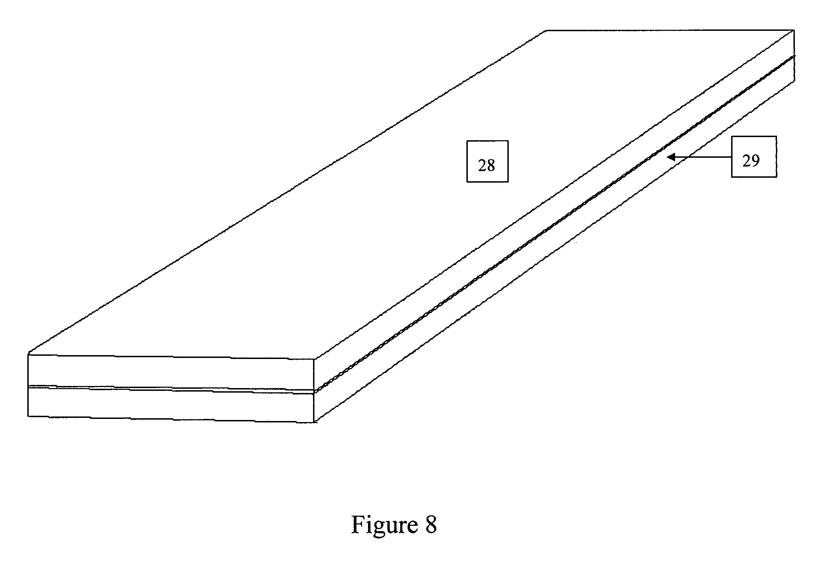

Next, as shown in figure 7, the core material (26) is cut to the basic dimensions of the panel and then the low-viscosity adhesive layer is applied so that the adhesive is spread everywhere on the core and creating a thick enough layer taking into consideration the mass that will be absorbed by the core. The necessary amount of adhesive depends on its viscosity and on the core material used. Then the core (26) with the adhesive is placed between the two skins (25 and 27) as shown in figure 7. The complete set it is placed either in a vacuum-tight bag where vacuum is applied or in a large press in such a way that all of its elements are compressed under external pressure up to 1 bar until the adhesive is fully cured. Thus the final structure emerges as shown in figure 8 in which only the upper (28) and the lower (29) skins are shown as the core is included in the panel.

In the following some examples of material selection for indicative uses of the invention are described.

### Working platform with dimensions 3.0 m X 0.70 m and loads up to 400 Kgrs uniformly distributed

For the metal skins aluminum sheets of 1.0 mm thick can be used and for the core extruded polystyrene foam (XPS) of density of 25 kgr/m³ and thickness of 100 mm. For the adhesive material a low viscosity two-component epoxy resin appropriate for the production of composite materials by injection under vacuum of pressurized can be used.

### Heavy loaded platform with loads of 1000 kgr/m² with dimensions of 2.5 m X 2.5 m

For the metallic skin an aluminium sheet of 3 mm thickness is used at the surface where the loads are applied and 1 mm in the lower face. For the core material a parallel combination of extruded polystyrene foam (XPS) or PVC foam with density of 50 kgr/m³ and thickness of up to 100 mm and close to the main loading face a thin layer of wood such as plywood. For the adhesive layer a two-component epoxy resin appropriate for the production of composite materials by injection under vacuum of pressurized can be used.

## Claims

1. Compact, flatwise sandwich panel with high structural performance and lightweight comprises
externally a metal skin of thickness from 0.3 mm up to 10 mm
internally a non-metallic solid core of thickness from 50 mm up to 250 mm
and a thin layer of low-viscosity adhesive with thickness from 0.01 mm up to 0.25 mm which holds all the aforeementioned materials together

2. Compact sandwich panel according to Claim Nr. 1, for the metal skin of which aluminum, steel, stainless steel, titanium or a combination of the above can be used.

3. Compact sandwich panel according to Claim Nr. 1, its metallic skin comprises at least two metal sheets which are suitably formed in such a way that placed in an appropriate way they can include the entire internal solid core.

4. Metal skin according to Claim Nr. 2, with thickness that may increase locally according to structural requirements.

5. Compact sandwich panel according to Claim Nr. 1, with solid core that may be from thermoset or thermoplastic polymer, concrete or foam, wood, plaster or a combination of the above.

6. Compact sandwich panel according to Claim Nr. 1, its solid core is formed in the net shape of the panel.

7. Compact sandwich panel according to Claim Nr. 1, with adhesive medium which has low viscosity of less that 500 mPas, with good mechanical performance and may be epoxy, polyurethane or methacrylic based.

8. Compact sandwich panel according to Claim Nr. 1, which is constructed by
i. Applying the low-viscous high-strength adhesive on the inner surfaces of the metal sheets as described in Claim Nr. 3 and the prefabricated core as described in Claim Nr. 6.
ii. Placing the above metal sheets around the above core in such a way that the core is totally enclosed.
iii. And applying compression the outer surfaces with differential pressure of up to 1 bar under vacuum conditions until the adhesive cures.
